# EUROPÄISCHE PATENTSCHRIFT

(11) **EP 0 392 188 B1**
(45) Veröffentlichungstag und Bekanntmachung des Hinweises auf die Patenterteilung: **13.01.1993**
(21) Anmeldenummer: 90104298.6
(22) Anmeldetag: 07.03.1990
(51) Int. Cl.: B60T 17/22, G01L 5/28

(54) **Prüfgerät für die Bremsanlage eines Kraftfahrzeugs**
Test device for a vehicle brake system
Appareil de test pour installation de freinage d'un véhicule

(30) Priorität: 10.04.1989 DE 3911656
(43) Veröffentlichungstag der Anmeldung: 17.10.1990
(73) Patentinhaber: EKUMA WERKZEUG UND MASCHINENBAU GMBH, D-66663 Merzig (DE)
(72) Erfinder: Kurtz, Günter, D-6636 Überherrn (DE)
(74) Vertreter: Bernhardt, Winfrid, Dr.-Ing.

(56) Entgegenhaltungen:
- DE-C- 2 928 153
- DE-C- 3 525 864
- DE-U- 8 716 534

## Beschreibung

Die Erfindung betrifft ein Prüfgerät für die Bremsanlage eines Kraftfahrzeugs, das in das Kraftfahrzeug nach hinten abgestützt einsetzbar ist und einen von einem feststehenden Teil aus mittels eines Antriebs nach vorne gegen das Bremspedal verschiebbaren Druckstempel aufweist, dessen Verschiebeweg durch einen integrierten Wegmesser meßbar ist und dessen auf das Bremspedal ausgeübte Kraft durch einen integrierten Kraftmesser meßbar ist.

Ein solches Prüfgerät ist aus der DE-PS 29 28 153 bekannt. Nach dem dortigen Vorschlag wird sein feststehendes Teil an der Lenksäule befestigt und sein Druckstempel pneumatisch vorgeschoben. Der Druckstempel besteht aus drei vorne durch ein Querhaupt verbundenen Stangen. Der Wegmesser, ein Dreh-Kodierer oder Impulsgenerator, wird von einer der Stangen betätigt. Der Kraftmesser, eine Kraftmeßdose, ist in dem Querhaupt angeordnet.

Derartige Geräte neigen zu Fehlmessungen, insbesondere der Kraft.

Der Erfindung liegt die Aufgabe zugrunde, ein verläßliches Prüfgerät zu schaffen.

Gemäß der Erfindung wird dieser Zweck dadurch erfüllt, daß der Druckstempel geteilt ist in ein vorderes und ein hinteres Teil, von denen das vordere mittels einer Führung axial gegen das hintere verschiebbar ist gegen die Kraft einer gegen die beiden Teile abgestützten Schraubenfeder von mindestens 28 mm Länge, daß ferner zwischen die beiden Teile ein weiterer Wegmesser geschaltet ist und daß eine dessen Wegmessung anhand der Charakteristik der Schraubenfeder in die Kraftmessung umsetzende und von der Wegmessung des erstgenannten Wegmessers abziehende elektronische Auswertung vorgesehen ist.

Die Erfindung beruht auf der Erkenntnis, daß geringfügige Verformungen der Karosserie unter der vom Prüfgerät auf das Bremspedal ausgeübten Kraft möglich sind und zu einer Verfälschung der Messung durch die Kraftmeßdose führen können, sich aber kaum auswirken, wenn die Kraft anhand der Verformung einer Schraubenfeder von einer Länge gemessen wird, bei der ein Federweg in der Größenordnung der genannten Verformungen noch keine nennenswerte Änderung der Federkraft zur Folge hat.

Nach einer vorteilhaften Ausgestaltung der Erfindung weist das hintere Teil eine nach vorne ragende Stange auf, auf der das vordere Teil über ein Lineargleitlager, vorzugsweise eine Kugelbüchse, mit einer Hülse sitzt; dahinter soll das vordere Teil mit einer weiteren Hülse die Stange mit einem Zwischenraum umgeben, in dem die Schraubenfeder als Druckfeder angeordnet ist und einerseits an einem Absatz des hinteren Teiles und andererseits an einer Stirnwand der weiteren Hülse abgestützt ist; das vordere Ende der ersteren Hülse soll im unbelasteten Zustand des Prüfgerätes an einem auf der hier herausragenden Stange angeordneten Anschlag abgestützt sein, über den hinweg ein starr mit den Hülsen verbundener anderer, vorzugsweise ein Gehäuse bildender, Teil des vorderen Teiles weiter nach vorne ragt.

So ergibt sich ein einfacher, geradliniger Kraftfluß, mit dem die Messungen entsprechend sicher werden. Das Gehäuse ist in mehreren Beziehungen besonders zweckmäßig:
In dem Gehäuse kann eine Drehsicherung für das vordere Teil untergebracht werden.
Die Drehsicherung besteht zweckmäßigerweise im wesentlichen aus einem an der Gehäusewand und/oder der ersteren Hülse befestigten Lineargleitlager und einem in diesem geführten Stift, der starr mit dem aus der ersteren Hülse herausragenden Teil der Stange verbunden ist, vorzugsweise über den genannten Anschlag.

In dem Gehäuse kann auch der weitere Wegmesser günstig Platz finden.
Der weitere Wegmesser ist vorzugsweise mit seinem einen Teil auf der ersteren Hülse angeordnet und mit seinem anderen Teil von dem herausragenden Teil der Stange aus, vorzugsweise über den genannten Anschlag, zurück über die Hülse ragend. Der Wegmesser ist hier zweckmäßigerweise ein Potentiometer, dessen Spule auf der ersteren Hülse angeordnet ist.

Um die gegeneinander beweglichen Teile des Prüfgeräts weitergehend einzukapseln, kann man das Gehäuse an seinem hinteren Ende mit einem Flansch versehen und von diesem einen Faltenbalg zu einem Gehäuse des übrigen Gerätes ziehen.

Nach einer weiteren Ausgestaltung weist das Gehäuse an seiner Stirnseite eine Kappe auf, die gegen die Kraft einer weiteren Feder geringfügig axial gegen das Gehäuse verschiebbar ist zur Betätigung eines die Wegmessung und die Kraftmessung auslösenden, vorzugsweise an der Gehäusewand angeordneten Schalters.
Das Gehäuse wird mit der Aufnahme dieser Schaltvorrichtung noch weiter genutzt, die außer dem Schalter selbst die bauliche Anbringung der Kappe umfaßt:
Zweckmäßigerweise sitzt die Kappe mit einer Hülse über ein Lineargleitlager, vorzugsweise eine Kugelbüchse, auf der genannten Stange und die weitere Feder ist stirnseitig an der Stange abgestützt. Vorzugsweise wird die bereits vorhandene Konstruktion über die Stange hinaus schließlich noch in der Weise für die Kappe als Drehsicherung genutzt, daß eine weitere an der Kappe angeordnete Hülse, vorzugsweise über ein Lineargleiterlager, über einen weiteren Abschnitt des genannten Stiftes greift.

Die Zeichnung gibt ein Ausführungsbeispiel der Erfindung wieder.
Fig. 1 zeigt ein Prüfgerät in perspektivischer Darstellung, teilweise aufgeschnitten, teilweise schematisiert,

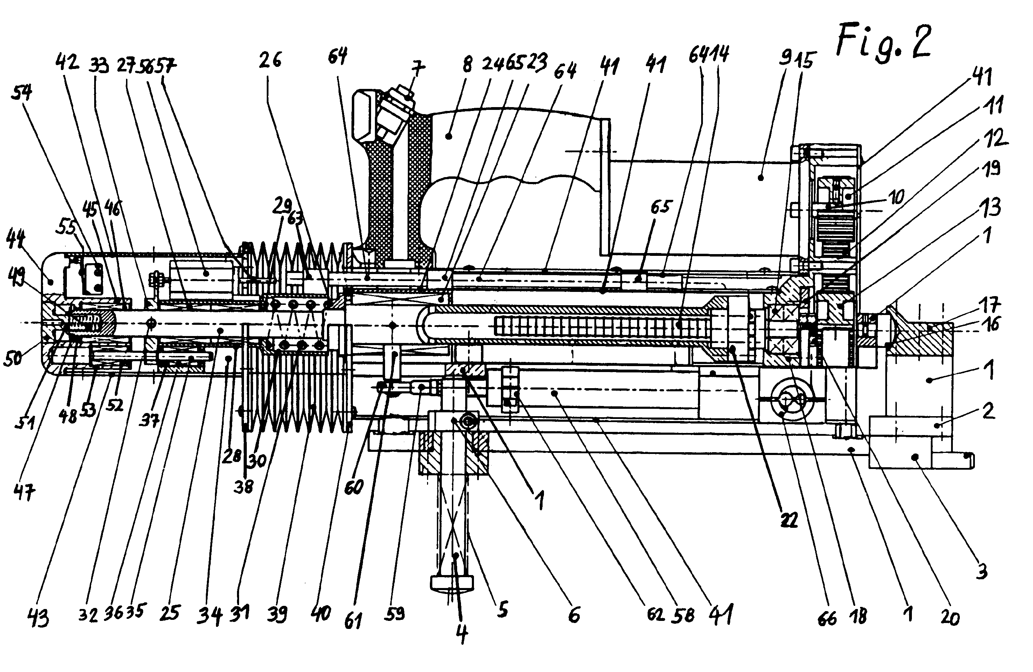

Fig. 2 zeigt das Prüfgerät in einem senkrechten axialen Schnitt.

Das Prüfgerät ist mit einem Vorrichtungsrahmen 1, der in dem dargestellten Schnitt an verschiedenen Stellen, aber nicht in seinem Zusammenhang erscheint, auf dem Platz vor dem Fahrersitz in das Kraftfahrzeug einsetzbar. Dafür weist der Vorrichtungsrahmen weiter im einzelnen einen Querbalken 2 und an diesem zwei Steck- und Stützteile 3 auf, mittels derer der Vorrichtungsrahmen von vorn in die Befestigungsschienen des Fahrersitzes eingesteckt und an ihnen nach hinten abgestützt wird; im übrigen wird er mit zwei Standfüßen 4, von denen in der Zeichnung nur einer erscheint, auf dem Boden aufgesetzt. Die Standfüße 4 sind jeweils unter Zusammendrückung einer bei 5 angedeuteten Feder in den Vorrichtungsrahmen 1 einschiebbar, die ausgezogene Endstellung ist durch einen Anschlag 6 begrenzt. Das Prüfgerät kann damit etwas nach unten schwenken, um ggf. einer Bewegungskomponente eines Bremspedals nach unten zu folgen. Starr mit dem Vorrichtungsrahmen 1 verbunden sind u.a. ein mit einem Startknopf 7 versehener Handgriff 8 und das Gehäuse eines Schrittmotors 9.

Die Welle 10 des Schrittmotors 9 treibt über eine Zahnscheibe 11, einen Zahnriemen 12 und eine Zahnscheibe 13 eine Spindel 14 eines Kugelgewindetriebes. Die Spindel 14 ist in einem Schrägkugellager 15 gelagert und außerdem über einen Kugelbolzen 16 an einem Widerlager 17 des Vorrichtungsrahmens 1 axial abgestützt. Das Schrägkugellager 15 sitzt in einem Flansch 18 des Vorrichtungsrahmens 1 und wird durch eine Scheibe 19 darin gehalten. Eine Nutmutter 20 dient zum genannten Einstellen des Lagerspiels des Schrägkugellagers 15.

Als das andere Teil des genannten Kugelgewindetriebes wirkt mit der Spindel 14 eine diese umgebende Hohlstange 21 zusammen, an deren Ende als Verdickung die in die Spindel 14 greifende Kugelmutter 22 ausgebildet ist. Die Hohlstange 21 ist axial geführt in einer nicht näher zu erkennenden Laufschiene sowie in einer Kugelbüchse 23, die in einer zu dem Vorrichtungsrahmen 1 gehörenden Aufnahme 24 gehalten ist. Mit etwas kleinerem Durchmesser setzt sich die Hohlstange 21 als volle Stange 24 fort. Dazwischen ist auf einem Absatz ein Federteller 26 als Mutter aufgeschraubt.

Auf der Stange 25 sind über ein Lineargleitlager aus zwei Kugelbüchsen 27 eine Hülse 28 und eine starr mit ihr verbundene, aber durch eine Stirnwand 29 von ihr getrennte weitere Hülse 30 verschiebbar gelagert.
Eine in der weiteren Hülse 30 angeordnete Schraubenfeder 31 ist gegen den Federteller 26 und gegen die Stirnwand 29 abgestützt. Die Anordnung wird axial gehalten durch einen mittels einer Spannhülse 32 auf der Stange 25 befestigten ringförmigen Anschlag 33.
In einer nicht im einzelnen gezeigten Weise bildet ein Gehäuse 34 zusammen mit den Hülsen 28 und 30 eine starre Baueinheit. Als Drehsicherung dieser Baueinheit greift von einem radialen Vorsprung des Anschlags 33 aus ein Stift 35 in eine Kugelbüchse 36 als Lineargleitlager, die in einer Kapsel 37 starr an der Hülse 28 gehalten ist.

Von einem, nach unten weiter überstehenden, Flansch 38 am hinteren Ende des Gehäuses 34 aus erstreckt sich ein Faltenbalg 39 zu einem im Umriß gleichen Flansch 40 eines Gehäuses 41, das in Ergänzung zu dem Vorrichtungsrahmen 1 die in diesem gelagerten Teile umschließt und gleichfalls nur stückweise in der Zeichnung erscheint.

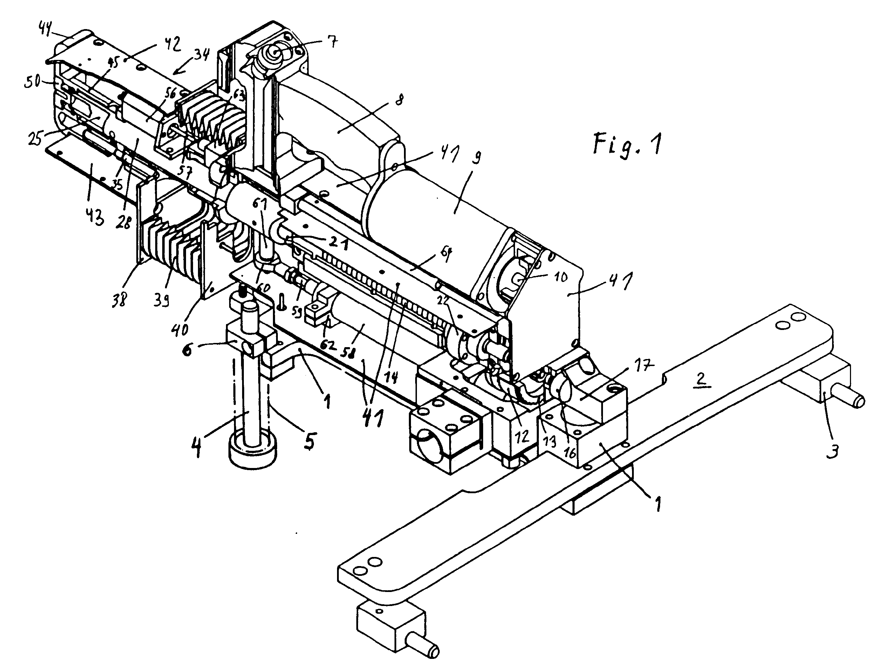

Das Gehäuse 34, von dem in Fig. 1 ein angeschraubter Deckel 42 und ein angeschraubter Boden 43 zu sehen sind, wird vorne durch eine kräftige Kappe 44 abgeschlossen. Die am Rand gerundete Kappe 44 schließt außen bündig mit dem Gehäuseumfang ab, greift innen teilweise unter die Gehäusewand und hat die Stirnfläche der Gehäusewand als axiale Abstützung. Gehalten ist sie durch eine an ihr angeformte Hülse 45, die, wiederum mit einem Lineargleitlager in Form einer Kugelbüchse 46, auf einem Endabschnitt der Stange 25 verschieblich gelagert und gesichert ist durch einen am Ende der Stange 25 aufgesetzten Seegerring 47, der vor einem Innenbund 48 der Hülse 45 sitzt. Nach dieser Montage ist durch die vor der Hülse 45 mit einer Öffnung versehene Kappe 44 hindurch eine Druckfeder 49 in eine entsprechende axiale Hohlbohrung der Stange 25 gesetzt worden und durch einen die genannte Öffnung verschließenden Stopfen 50, an dem ein in die Hohlbohrung reichendes Druckstück 51 ausgebildet ist, unter eine Vorspannung gesetzt worden. Die Kappe 44 ist ebenso wie das Gehäuse 34 selbst drehgesichert, und zwar durch einen anderen Abschnitt desselben Stiftes 35, der, wiederum über eine Kugelbüchse 52, in eine weitere an dem Deckel 44 ausgebildete Hülse 53 längsverschieblich faßt.

Ein innen an der Wandung des Gehäuses 34 angebrachter Schalter 54 wird über ein Stellglied 55 von der Kappe 44 aus betätigt, wenn diese unter Zusammendrückung der Druckfeder 49 bis zum Anliegen an der Stirnfläche der Wandung des Gehäuses 34 eingedrückt wird.

Auf der Hülse 28 ist ein Potentionmeter (56) angeordnet. Der zugehörige, in der Potentiometerspule bewegte Stab 57 ist an einem an dem Anschlag 33 radial abstehenden Finger befestigt.

Ein anderes Potentiomter 58 ist innerhalb des Gehäuse 41 an dem Vorrichtungsrahmen 1 angeordnet mittels einer Klammer 62. Sein Stab 59 ist über einen Gelenkkopf 60 mit einem von der Hohlstange 21 abstehenden Finger 61 verbunden.

An der weiteren Hülse 30 ist in einem Klotz 63 ein Rohr 64 befestigt, das auf seiner Länge zwei Gleitschuhe 65 aufweist. Das Rohr 64 dient als Kabelführung für die Leitungsverbindungen des Schalters 54 und des Potentiometers 56; die am hinteren Ende aus dem Rohr 64 austretenden Leitungen sind von da ab in einer Schleife gelegt, um dem weiter unten beschriebenen Vorschub folgen zu können.
Ein Kabelanschluß für das Prüfgerät insgesamt findet sich bei 66.

Wie sich aus den vorstehenden baulichen Merkmalen ergibt, kann durch Betätigen des Schrittmotors 9 über das Getriebe 11-13 die Spindel 14 gedreht und damit durch den Kugelgewindetrieb der aus den Teilen 21,22,25-57 gebildete Druckstempel vorgeschoben werden. Der Faltenbalg 49 dehnt sich dabei. Die erwähnte, an das Rohr 64 anschließende Kabelschleife geht bei der Bewegung mit.
Wird die Kappe 44 nach Anstoß an das Bremspedal gegen die Kraft der Druckfeder 49 an die Stirnfläche der Wandung des Gehäuses 34 gedrückt, zu der vorher ein Abstand von z.B. 1-2 mm bestand, wird der Schalter 54 betätigt, um die Messungen zu registrieren, beispielsweise ein Kraft-Weg-Diagramm aufzuzeichnen. Die Schaltkraft ist durch die Druckfeder 49 so bemessen, beispielsweise auf 3-4 N, daß sie noch nicht beim Leerhub des Bremspedals auftritt, sondern erst bei der Kraftübertragung auf die Bremsanlage.
Nachdem beim weiteren Vorschub und Eindrücken des Bremspedals die geringe Vorspannkraft der Schraubenfeder 31 überschritten worden ist, wird die Schraubenfeder 31 zusammengedrückt; die Hülse 27 entfernt sich von dem Anschlag 33, sie verschiebt sich auf der Stange 25. Der Verschiebeweg, mit anderen Worten der Federweg der Schraubenfeder 31, wird von dem Potentiometer 56 gemessen. Eine elektronische Auswertung setzt diesen Federweg anhand der Charakteristik der - geeichten - Schraubenfeder 31 in Kraftmessung um. Ferner zieht sie den Federweg von der Wegmessung des Potentiometers 58 ab, so daß der tatsächlich an dem Bremspedal wirksam gewordene Vorschubweg registriert wird.

Über die im einzelnen durchgeführten Manipulationen, Pulsierbewegungen, Wartezeiten usw., braucht nichts näheres gesagt zu werden.

## Patentansprüche

1. Prüfgerät für die Bremsanlage eines Kraftfahrzeugs, das in das Kraftfahrzeug nach hinten abgestützt einsetzbar ist und einen von einem feststehenden Teil (1-20) aus mittels eines Antriebs (9-20) nach vorne gegen das Bremspedal verschiebbaren Druckstempel (21,22,25-57) aufweist, dessen Verschiebeweg durch einen integrierten Wegmesser (58) meßbar ist und dessen auf das Bremspedal ausgeübte Kraft durch einen integrierten Kraftmesser (31,56) meßbar ist,
dadurch gekennzeichnet,
daß der Druckstempel (21,22,25-57) geteilt ist in ein vorderes (28-30,34,44) und ein hinteres Teil (21,22,25,26), von denen das vordere mittels einer Führung (27) axial gegen das hintere verschiebbar ist gegen die Kraft einer gegen die beiden Teile abgestützten (26;29) Schraubenfeder (31) von mindestens 28 mm Länge, daß ferner zwischen die beiden Teile (28-30,34,44;21,22,25,26) ein weiterer Wegmesser (56) geschaltet ist und daß eine dessen Wegmessung anhand der Charakteristik der Schraubenfeder (31) in die Kraftmessung umsetzende und von der Wegmessung des erstgenannten Wegmessers (58) abziehende elektronische Auswertung vorgesehen ist.

2. Prüfgerät nach Anspruch 1,
dadurch gekennzeichnet,
daß das hintere Teil(21,22,25,26) eine nach vorne ragende Stange (25) aufweist, auf der das vordere Teil (28-30,34,44) über ein Lineargleitlager, vorzugsweise eine Kugelbüchse (27), mit einer Hülse (28) sitzt, daß dahinter das vordere Teil mit einer weiteren Hülse (30) die Stange (25) mit einem Zwischenraum umgibt, in dem die Schraubenfeder (31) als Druckfeder angeordnet ist und einerseits an einem Absatz (26) des hinteren Teiles und andererseits an einer Stirnwand (29) der weiteren Hülse (30) abgestützt ist und daß das vordere Ende der ersteren Hülse (28) im unbelasteten Zustand des Prüfgerätes an einem auf der hier herausragenden Stange (25) angeordneten Anschlag (33) abgestützt ist, über den hinweg ein starr mit den Hülse (28,30) verbundener anderer, vorzugsweise ein Gehäuse (34) bildender, Teil des vorderen Teiles (28-30,34,44) weiter nach vorne ragt.

3. Prüfgerät nach Anspruch 2,
dadurch gekennzeichnet,
daß in dem Gehäuse (34) eine Drehsicherung (35-37) für das vordere Teil (28-30, 34,44) angeordnet ist.

4. Prüfgerät nach Anspruch 3,
dadurch gekennzeichnet,
daß die Drehsicherung im wesentlichen aus einem an der Gehäusewand und/oder der ersteren Hülse (28) befestigten Lineargleitlager (36) und einem in diesem geführten Stift (35) besteht, der starr mit dem aus der ersteren Hülse (28) herausragenden Teil der Stange (25) verbunden ist, vorzugsweise über den genannten Anschlag (33).

5. Prüfgerät nach einem der Ansprüche 2 bis 4,
dadurch gekennzeichnet,
daß der weitere Wegmesser (56) in dem Gehäuse (34) angeordnet ist.

6. Prüfgerät nach Anspruch 5,
dadurch gekennzeichnet,
daß der weitere Wegmesser (56) mit seinem einen Teil (56) auf der ersteren Hülse (28) angeordnet ist und mit seinem anderen Teil (57) von dem herausragenden Teil der Stange (25) aus, vorzugsweise über den genannten Anschlag (33), zurück über die Hülse (28) ragend.

7. Prüfgerät nach Anspruch 5 oder 6,
dadurch gekennzeichnet,
daß der weitere Wegmesser (56) ein Potentiometer (56) ist, dessen Spule auf der ersteren Hülse (28) angeordnet ist.

8. Prüfgerät nach einem der Ansprüche 2 bis 7,
dadurch gekennzeichnet,
daß das Gehäuse (34) an seinem hinteren Ende einen Flansch (38) aufweist, von dem sich ein Faltenbalg (39) bis zu einem Gehäuse (41) des übrigen Gerätes erstreckt.

9. Prüfgerät nach einem der Ansprüche 2 bis 6,
dadurch gekennzeichnet,
daß das Gehäuse (34) an seiner Stirnseite eine Kappe (44) aufweist, die gegen die Kraft einer weiteren Feder (49) geringfügig axial gegen das Gehäuse (34) verschiebbar ist zur Betätigung eines die Wegmessung und die Kraftmessung auslösenden, vorzugsweise an der Gehäusewand angeordneten Schalters (54).

10. Prüfgerät nach den Ansprüchen 2 und 9,
dadurch gekennzeichnet,
daß die Kappe (44) mit einer Hülse (45) über ein Lineargleitlager, vorzugsweise eine Kugelbüchse (46), auf der genannten Stange (25) sitzt und die weitere Feder (49) stirnseitig an der Stange (25) abgestützt ist.

11. Prüfgerät nach den Ansprüchen 4 und 10,
dadurch gekennzeichnet,
daß ein weiterer Abschnitt des genannten Stiftes (35) zusammen mit einer, vorzugsweise über ein Lineargleitlager (52), über ihn greifenden weiteren an der Kappe (44) angeordneten Hülse (53) eine Drehsicherung für die Kappe (44) bildet.

## Claims

1. Test device for the brake system of a motor vehicle, which is capable of being introduced into the vehicle supported at the rear and exhibits a plunger piston (21,22,25-57) capable of displacement by means of a drive (9-20) from a fixed part (1-20) forwards against the brake pedal, the displacement travel of which plunger piston is capable of measurement by an integral travel-measuring device (58), and the force exerted by it on the brake pedal is capable of measurement by an integral force-sensing device (31,56),
***charaterized in that***
the plunger piston (21,22,25-57) is divided into a front part (28-30,34,44) and a rear part (21,22,25,26), of which the front part is capable of axial displacement against the rear part by means of a guide (27) against the force exerted by a helical spring (31) of at least 28 mm in length bearing (26;29) against the two parts, in that an additional travel-measuring device (56) is also connected between the two parts (28-30,34,44;21,22,25,26), and in that a means of electronic evaluation is provided for converting its travel measurement on the basis of the characteristic curve of the helical spring (31) into the force measurement, and for deducting it from the travel measurement of the first-mentioned travel-measuring device (58).

2. Test device according to Claim 1,
***characterized in that***
the rear part (21,22,25,26) exhibits a bar (25) projecting towards the front, on which the front part (28-30,34,44) is mounted with a sleeve (28) over a linear sliding bearing, preferably a ball bushing (27), in that behind this the front part surrounds the bar (25) with a further sleeve (30) leaving a clearance in which the helical spring (31) is arranged as a compression spring and is supported on the one hand on a shoulder (26) on the rear part and on the other hand on an end wall (29) of the further sleeve (30), and in that, with the test device in its no-load condition, the front end of the first sleeve (28) is supported against a stop (33) arranged on the bar (25) projecting at this point, over which another part of the front part (28-30,34,44) rigidly connected to the sleeves (28,30), preferably forming a casing (34), projects further to the front.

3. Test device according to Claim 2,
***characterized in that***
a means (35-37) of preventing the front part (28-30, 34,44) from rotating is arranged in the casing (34).

4. Test device according to Claim 3,
***characterized in that***
the means of preventing rotation consists essentially of a linear bearing (36) secured to the wall of the casing and/or to the first sleeve (28) and a pin (35) guided therein, which is rigidly connected to the part of the bar (25) projecting from the first sleeve (28), preferably via the aforementioned stop (33).

5. Test device according to one of the Claims 2 to 4,
***characterized in that***
the additional travel-measuring device (56) is arranged inside the casing (34).

6. Test device according to Claim 5,
***characterized in that***
the additional travel-measuring device (56) is preferably arranged with one part (56) on the first sleeve (28) and with its other part (57) extending from the projecting part of the bar (25), preferably via the aforementioned stop (33), back over the sleeve (28).

7. Test device according to Claims 5 or 6,
***characterized in that***
the additional travel-measuring device (56) in this case is a potentiometer (56), the coil of which is arranged on the first sleeve (28).

8. Test device according to one of the Claims 2 to 7,
***characterized in that***
the casing (34) exhibits at its rear end a flange (38), from which a bellows arrangement (39) extends to a casing (41) for the rest of the device.

9. Test device according to one of the Claims 2 to 6,
***characterized in that***
the casing (34) exhibits on its end face a cap (44), which is capable of slight axial displacement against the casing (34) against the force exerted by a further spring (49) in order to actuate a switch (54), preferably arranged on the wall of the casing, for the purpose of initiating the travel measurement and the force measurement.

10. Test device according to Claims 2 and 9,
***characterized in that***
the cap (44) is seated with a sleeve (45) over a linear sliding bearing, preferably a ball bushing (46), on the aforementioned bar (25), and the further spring (49) is supported at its end face on the bar (25).

11. Test device according to Claims 4 and 10,
***characterized in that***
a further section of the aforementioned pin (35), together with a further sleeve (53) arranged on the cap (44) and overlapping it, preferably via a linear sliding bearing (52), forms a means of preventing rotation of the cap (44).

## Revendications

1. Appareil d'essai de l'installation de freinage d'un vehicule automobile, qui peut être monté dans le véhicule, appuyé vers l'arrière et qui comporte un piston de compression (21, 22, 25-27) partant d'une partie fixe (1-20) et déplaçable vers l'avant contre la pédale de frein à l'aide d'un organe d'entrainement (9-20), la course étant mesurable à l'aide d'un palpeur de déplacement intégré (58) et la force exercée sur la pédale de frein étant mesurable à l'aide d'un palpeur de force intégré (31, 56),
caractérisé en ce que le piston de compression (21, 22, 25-27) est divisé en un élément avant (28-30, 34, 44) et un élément arrière (21, 22, 25, 26), l'élément avant étant déplaçable axialement moyennant un organe de guidage (27) contre l'élément arrière et contre l'effet d'un ressort hélicoïdal (31) d'au moins 28 mm de longueur appuyé contre les deux éléments (26; 29),
en ce que , par ailleurs, un autre palpeur de déplacement (56) est agencé entre les deux éléments (28-30, 34, 44; 21, 22, 25, 26) et en ce qu'une évaluation électronique s'éffectue pour transformer la mesure du déplacement de ce dernier en mesure de force moyennant la caractéristique du ressort hélicoïdal (31) et pour la déduire de la mesure de déplacement du premier palpeur de déplacement (58).

2. Appareil d'essai selon la revendication 1,
caractérisé en ce que l'élément arrière (21, 22, 25, 26) comporte une tringle (25) s'étendant vers l'avant sur laquelle est monté l'élément avant (28-30n 34, 34) par l'intermédiaire d'un palier de glissement linéaire, de préférence un fourreau à billes (27), fripé d'une douille (28),
en ce que, à l'arrière de ceci, l'élément avant entoure la tringle (25) avec une autre douille (30), moyennant un interstice dans lequel est agencé le ressort hélicoïdal (31) en tant que ressort de compression, qui prend appui, d'une part, contre un épaulement (26) de l'élément arrière et, d'autre part, contre une paroi frontale (29) de l'autre douille (30) et
en ce que l'extrémité avant de la première douille (28) prend appui, à l'état non sollicité de l'appareillage d'essai, contre une butée (33), agencée sur la tringle (25) qui fait saillie, butée (33) surplombée par une autre partie de l'élément avant (28-30, 34, 44) rigidement reliée aux douilles (28, 30) et formant, de préférence, un carter (34).

3. Appareil d'essai selon la revendication 2,
caractérisé en ce que le carter (34) est équipé d'une sécurité de rotation (35-37) de l'élément avant (28-30, 34, 44).

4. Appareil d'essai selon la revendication 3,
caractérisé en ce que la sécurité en rotation consiste essentiellement en un palier de glissement linéaire (36) solidaire de la paroi de carter et/ou de la première douille (28), et en une broche (35) graduée dans ledit palier de glissement, la broche étant rigidement reliée à la partie de tringle (25) qui sort de la première douille (28), de préférence par l'intermédiaire de la butée (33).

5. Appareil d'essai selon l'une des revendications 2 à 4,
caractérisé en ce que l'autre palpeur de déplacement (56) est agencé dans le carter (34).

6. Appareil d'essai selon la revendication 5,
caractérisé en ce que l'autre palpeur de déplacement (56) est agencé avec sa première partie (56) sur la première douille (28) et avec son autre partie (57) partant de la partie en saillie de la tringle (25) , depréférence par dessus ladite butée (33), de nouveau vers la douille (28).

7. Appareil d'essai selon la revendication 5 ou 6, caractérisé en ce que l'autre palpeur de déplacement (56) consiste en un potentiomètre (56) dont la bobine est agencée sur la première douille (28).

8. Appareil d'essai selon l'une des revendications 2 à 7,
caractérisé en ce que le carter (34) comporte, à son extrémité arrière, une bride (38) à partir de laquelle un soufflet (39) s'étend jusqu'à un carter (41) de l'appareil restant.

9. Appareil d'essai selon l'une des revendications 2 à 6,
caractérisé en ce que le carter (34) comporte, à sa face frontale, une cache (44) légèrement déplaçable selon une direction axiale contre l'effet d'un autre ressort (49), par rapport au carter (34), pour l'actionnement d'un commutateur (54), de préférence agencé à la paroi de carter, qui commande la mesure de déplacement et de force.

10. Appareil d'essai selon les revendications 2 et 9, caractérisé en ce que la cache (44) est logée à l'aide d'une douille (45) via un palier de glissement linéaire, de préférence un fourreau à billes (46), sur ladite tringle (25) et
en ce que l'autre ressort (49) s'appuie sur la face frontale de la tringle (25).

11. Appareil d'essai selon les revendications 4 et 10, caractérisé en ce qu'un tronçon supplémentaire de ladite broche (35) constitue une sécurité en rotation de la cache (44) avec une autre douille (53) agencée à la cache(44) qui l'entoure de préférence moyennant un palier à glissement linéaire (52).
